# EUROPÄISCHE PATENTSCHRIFT

(11) **EP 0 781 181 B1**
(45) Veröffentlichungstag und Bekanntmachung des Hinweises auf die Patenterteilung: **09.12.1998**
(21) Anmeldenummer: 95929771.4
(22) Anmeldetag: 05.09.1995
(51) Int. Cl.: B23B 27/04

(54) **STECHEINSATZ ZUR SPANABHEBENDEN BEARBEITUNG VON WERKSTÜCKEN**
CUTTER INSERT FOR MACHINING WORKPIECES
PLAQUETTE POUR USINAGE DE PIECES PAR ENLEVEMENT DE COPEAUX

(30) Priorität: 12.09.1994 DE 4433389; 21.06.1995 DE 29509664 U
(43) Veröffentlichungstag der Anmeldung: 02.07.1997
(73) Patentinhaber: Widia GmbH, 45145 Essen (DE)
(72) Erfinder: HINTZE, Wolfgang, D-45136 Essen (DE); WÜRFELS, Andreas, D-46535 Dinslaken (DE); RUTHER, Günter, D-45768 Marl (DE); KNICKENBERG, Bernd, D-45355 Essen (DE)
(74) Vertreter: Vomberg, Friedhelm, Dipl.-Phys.
(86) Internationale Anmeldenummer: DE9501219
(87) Internationale Veröffentlichungsnummer: WO9608330

(56) Entgegenhaltungen:
- EP-A- 0 416 900
- EP-A- 0 568 512
- DE-C- 3 643 802
- US-A- 4 776 733

## Beschreibung

Die Erfindung betrifft einen Stecheinsatz zur spanabhebenden Bearbeitung von Werkstücken nach dem Oberbegriff des Patentanspruchs 1 und wie aus EP-A-0 568 512 bekannt.

Ein Stecheinsatz zur spanabhebenden Bearbeitung von Werkstücken mit einer vorderen, quer zur Stecheinsatzlängsachse angeordneten Schneidkante (Stirnschneide), einer mittleren, konkaven Spanformmulde, die seitlich durch Spanflächenschutzfasen begrenzt wird, wobei die an die Spanformmulde angrenzenden Flanken der Spanflächenschutzfasen in senkrechter Richtung zur Schneidkante, d.h. in Spanablaufrichtung, zunächst konvergieren, so daß die Spanformmuldengrundfläche sich entsprechend verjüngt, und anschließend wieder divergieren, wird in der WO 89/01375 beschrieben. Der dortige Stecheinsatz besitzt hierzu konvex geformte Seitenflanken, die an die Spanformmulde angrenzen. Die Spanflächenschutzfasen sind angrenzend an die Stirnschneide eben und unter einem Spanwinkel von 0° ausgebildet und besitzen im Anschluß an diesen ebenen Bereich eine konvexe Ausgestaltung, die in dieser Druckschrift als transversale Ausnehmung bezeichnet wird. Nachteiligerweise hat sich beim praktischen Einsatz dieser Stecheinsätze gezeigt, daß die Spanführung ebenso unzureichend ist wie die Spanquerschnittsverformung, so daß die gewünschte Stauchung des Spanes über seine Breite zu gering ist, um beim Stechen einen ungehinderten Spanabfluß zu bewerkstelligen. Ebenso besteht die Gefahr, daß der Span über die beschriebene transversale Ausnehmung berührungslos hinweggleitet und die zum Spanbruch notwendige Aufwärtsbiegung nicht oder nur unzureichend erfährt.

Die EP-A-0 568 512 A1 beschreibt einen Stecheinsatz zur spanabhebenden Bearbeitung von Werkstücken, der eine vordere, quer zur Stecheinsatzlängsachse angeordnete Schneidkante (Stirnschneide) aufweist, ferner eine mittlere konkave Spanformmulde, die seitlich durch Spanflächenschutzfasen begrenzt wird. Im Anschluß an jede der Spanflächenschutzfasen sind zur Spanformmulde hin gerichtete und in diese hineinragende erhabene rippenförmige Spanformelemente vorgesehen, die sich spiegelsymmetrisch zur Schneideinsatzlängsachse gegenüberliegen und die die Spanformmuldengrundfläche über einen gewissen Bereich in Spanablaufrichtung verjüngen und im hieran anschließenden Bereich in rippenförmige Spanformelemente übergehen, die parallel zueinander angeordnet sind. Zusätzlich sind im Abstand von der Schneidkante bzw. im Anschluß an eine Fase eine Mehrzahl von muldenförmigen Vertiefungen vorgesehen, die eine längliche Ausdehnung parallel zur Stecheinsatzlängsachse haben. Seitlich hiervon sind jeweils weitere muldenförmige Vertiefungen mit kürzerer Länge als die Vertiefungen in der Mitte vorgesehen.

In der DE-U1 92 14 563.9 wird ein Stecheinsatz beschrieben, der eine gerade Schneidkante besitzt, die an ihren beiden Enden in vordere Spanflächenrandteile (Spanflächenschutzfasen) übergeht, wobei zwischen den genannten Spanflächenrandteilen eine Spanverformungsmulde angeordnet ist. Die Spanflächenrandteile sollen durchgehend negativ sein, wohingegen der Spanwinkel der der Schneidkante benachbarten Seite der Spanverformungsmulde durchgehend positiv ist. Durch die Ausbildung der Spanflächenrandteile wird die Breite der Mulde in Spanablaufrichtung gesehen zunächst größer, bedingt durch die in etwa in der Draufsicht kreisförmige Spanformmulde, die seitlich durch die Spanflächenschutzfasen begrenzt wird. Erst am Ende der Spanformmulde verjüngt sich konstruktionsgemäß deren Breite. Die nach der genannten Schrift gestellte Aufgabe, eine sichere und genügende Verschmälerung der Spanbreite ebenso zu bewirken wie ein Schneiden mit kürzerer Spanbildung zu ermöglichen, wird jedoch nur unzureichend gelöst, da die Gefahr von Werkstoffablagerungen in der Spanformmulde sowie etwa dort angeordneten Rippen die Schnitteigenschaften des Schneideinsatzes im Gebrauch verschlechtern. Ferner ist dieser Schneideinsatz nur in einem eng begrenzten Vorschubbereich einsetzbar.

Die DE 36 43 802 A1 beschreibt einen Stecheinsatz, bei dem an den Seitenwänden im Bereich der Schneidkante jeweils eine von der Schneidkante bis zur Oberkante der Seitenwand verlaufende Spanfläche angeordnet ist, wobei in Vorschubrichtung gesehen der der Schneidkante benachbarte vordere Teil der Spanfläche und der benachbarte rückwärtige Teil der Spanfläche im Winkel zueinander angeordnet sind, wobei die genannten Spanflächenteile als Spanflächenschutzfasen eine mittlere Spanformmulde begrenzen. Die von den Spanflächenschutzfasen abfallenden Flanken sind eben und in einer Frontansicht auf die Schneidkante gesehen schrägliegend angeordnet und schließen an einen ebenfalls in Spanablaufrichtung konkav gewölbten, aber parallel zur Schneidkante geradlinigen Spanflächengrund an. Auch dieser Stecheinsatz zeigt eine nur ungenügende Schneidenstabilität, Spanführung und Spanquerschnittsverformung, insbesondere wird die Aufgabe, verhältnismäßig kurze Späne vom Werkzeug abzuheben, nicht oder nur unzureichend gelöst.

Die EP 0 257 002 A2 oder die im Kern gleichlautende US-A-47 76 733 beschreibt einen Stecheinsatz, der an der vorderen Freifläche eine vorzugsweise zylindersegmentartige Ausstülpung besitzt, die bewirken soll, daß bei der unter einem positiven Winkel angeordneten Freifläche bei gleichzeitiger bis in die Schneidkante hineinreichender Spanformmulde entstehende abgesenkte Bereich beim Nutenschneiden kompensiert wird, so daß sich ein ebener Nutgrund im geschnittenen Werkzeug erzeugen läßt. Darüber hinaus besitzt dieser Stecheinsatz seitliche Spanflächenschutzflanken, die von der Schneidkante in Spanablaufrichtung betrachtet zunächst schmaler werden und die erst im daran anschließenden Bereich die im wesentlichen konstante Breite haben, bevor sie sich zum Ende der konkav ausgebildeten Spanformmulde wieder verbreitern. Auch dieses Werkzeug zeigt eine unzureichende Schneidenstabilität sowie nach wie vor bei kleinen Schnittdurchmesser einen unebenen Nutgrund im geschnittenen Werkstück.

Ein Stecheinsatz nach dem Oberbegriff des Anspruches 3 ist beispielsweise aus der DE 24 04 302 C2 bekannt. Dieser Stecheinsatz besitzt den Nachteil, daß keine ausreichende Spankontrolle bei kleinen Vorschüben gegeben ist. Dazu fließen die Späne praktisch in der gesamten Breite der Stirnschneide ab, was zu Schäden in den Flanken der gestochenen Nuten führen kann. Die relativ scharfkantige Vertiefung an der Stirnschneide birgt zudem die Gefahr der Schneidenbröckelung oder des Schneidenbruches.

Darüber hinaus ist aus der EP 0 416 900 B1 ein Stecheinsatz mit einer konkaven Schneidkante bekannt, an die sich in seitlichen Bereichen konvex gekrümmte Spanablenkflächen und im mittleren Bereich eine Einkerbung auf der Spanfläche anschließen. Die kontinuierlichen Krümmungsänderungen der Spanfläche dieses Stecheinsatzes in Längs- und Querrichtung von der Schneidkante zu den Ablenkspitzen auf der Spanfläche reichen jedoch nicht aus, um beim Abstechen zäher Werkstoffe einen flächigen Kontakt des ablaufenden Spanes und der Spanfläche zu verhindern, d.h., den thermischen und adhäsiven Verschleißangriff nachhaltig zu reduzieren. Darüber hinaus sind bereits wegen der kontinuierlichen Krümmungsänderungen der Spanfäche die Seitenführung des Spanes und die für den Spanbruch notwendige "Griffigkeit" der Ablenkspitzen nicht ausreichend.

Es ist Aufgabe der vorliegenden Erfindung, einen Stecheinsatz der eingangs genannten Art zu schaffen, der eine prozeßsichere Kurzspanbildung gewährleistet, bei dem sich der Span bei unterschiedlichem plastischen Verformungsvermögen des Werkstückstoffes und innerhalb eines möglichst breiten Vorschubbereiches in der Weise anpaßt, daß die erzeugten Späne schmaler als die Stechbreite sind, um eine hohe Oberflächengüte der Werkstücknutflanken zu erzielen, und um ein Verklemmen der Späne in der Nut zu vermeiden, wobei schädliche Werkstoffverklebungen oder Ablagerungen auf der Spanfläche im Hinblick auf eine hohe Standzeit zu vermeiden sind und womit ein schwingungsarmer Spanablauf und Spanbruch beim Schneiden gewährleistet werden kann.

Diese Aufgabe wird durch einen Stecheinsatz nach Anspruch 1 gelöst.

Der im Anspruch 1 beschriebene Stecheinsatz ist dadurch gekennzeichnet, daß die erhabenen Spanformelemente nasenförmig in die Spanformmulde hineinragen und diese sprunghaft, vorzugsweise unstetig in Spanablaufrichtung verjüngen, wobei der Tangentialwinkel, den die Oberkante des Spanformelementes mit der Stecheinsatzlängsachse bildet, gemessen im Abstand der Breite der angrenzenden Schutzflankenfase von größeren Anfangswerten auf 35° bis 75°, gemessen etwa im Abstand der 1 1/2-fachen Schutzflankenfasenbreite, abnimmt und schließlich in eine geradlinige Kante übergeht, die unter einem Winkel von 5° bis 30° zur Stecheinsatzlängsachse geneigt ist.

Alternativ hierzu ist der Stecheinsatz nach Anspruch 2 dadurch gekennzeichnet, daß die Spanformelemente erhaben sind und ballige Seitenflächen aufweisen, daß die Spanformelemente die Spanflächenschutzflanken sowohl in der Höhe als auch in der Breite überragen und die spiegelsymmetrisch zur Schneideinsatzlängsachse einander gegenüberliegend so angeordnet sind, daß sie bis in die Spanformmulde hineinragen und die durch die Spanformmulde definierte Spanablaufbreite in schneidkantennahen Bereichen minimieren, wobei die Spanformelemente jeweils eine Oberkante aufweisen, die an die seitliche ebene Freifläche angrenzt und auf einer etwa der Spanflächenschutzflankenfasenbreite entsprechenden Breite teilweise gerade und/oder konvex gekrümmt verläuft, so daß der Abstand der Oberkante zur Schneidkante in Richtung zur Stecheinsatzlängsachse hin zunimmt.

Beiden Stecheinsätzen ist die Wirkung gemeinsam, daß der ablaufende Span nach der durch die Spanflächenschutzflanken und die mittlere Spanformmulde erhaltenen plastischen Vorverformung jeweils durch die nasenförmigen erhabenen Spanformelemente eine weitere Stauchung sowohl in seinem Querschnitt als auch in Richtung der senkrecht hierzu angeordneten Ebene erfährt, so daß die erzeugten ablaufenden Späne deutlich schmaler als die Stechbreite sind und in Form von Kurzspänen brechen. Bereits nasenförmige Spanformelemente, die torartig in die Spanformmulde hineinragen, aber in der Höhe die benachbarte Spanflächenschutzfase nicht überragen, verhindern wirkungsvoll ein Verkleben oder Ablagerungen am Ende des Spanformmuldengrundes. Die Spanaufbiegung senkrecht zur Spanfläche des Stecheinsatzes wird in den seitlichen Bereichen erst recht verstärkt, wenn die im Anspruch 2 beschriebenen Spanformelemente verwendet werden, die mit ihrer Oberkante jeweils die davorliegende Spanflächenschutzfase überragen. Die Spanformelemente sind in jedem Falle so auszubilden, daß sie sowohl an der der vorderen Schneidkante zugewandten als auch der der seitlichen Freifläche jeweils abgewandten Seite sowie im dazwischenliegenden Übergangsbereich zumindest teilweise ballige konvexe Flanken aufweisen, die ein deutliches sprunghaftes Aufbiegen des Spanes in im wesentlichen senkrechter Richtung zur Spanfläche des Stecheinsatzes bewirken. Darüber hinaus sind die Spanformelemente vorzugsweise so gestaltet, daß sie den Spanformmuldengrund torartig verjüngen.

Diese Aufgabe wird ferner durch einen Stecheinsatz nach Anspruch 3 gelöst, bei dem erfindungsgemäß zwischen den Spanflächenrandteilen und der Spanformmulde jeweils im Abstand von mehr als 0,1 mm oder mehr als 3 % der Stechbreite von der Stirnschneide eine Stufe angeordnet ist. Dieser Stecheinsatz hat folgende Vorteile:
- Vermeidung von Grat- oder Butzenbildung am Werkstück,
- Reduktion der Spanbreite gegenüber der Stechbreite,
- hohe Oberflächengüte der Werkstückflanken,
- kontrollierter Spanbruch bei zähen Werkstückstoffen,
- keine Einbußen in der Schneidenstabilität,
- gute Spanführung in der Nut und kontrollierter Spanbruch bei variablen Stirnschneidenprofilen, insbesondere variablen Schrägungswinkeln der Schneidkante,
- Erzeugung möglichst geringer Querkräfte beim Zerspanen mit variablen Stirnschneidenprofilen zwecks guter Ebenheit der Nutflanken.

Die seitlichen und im wesentlichen flachen bzw. eben ausgebildeten Spanflächenrandteile liegen konstruktionsgemäß unter einem betragsmäßig kleineren Spanwinkel als die mittlere konkave Spanformmulde und gehen in einer Querrichtung zur Stecheinsatzlängsachse betrachtet unter Bildung einer konvexen balligen Stufe in die Mulde über. Die in der Höhe abgesetzten Stufenflächen bewirken eine deutliche Reduktion des Kontaktes, den der ablaufende Span zur Spanfläche erfährt, womit die hierbei entstehenden Reibungskräfte erheblich minimiert werden. Einhergehend hiermit werden niedrige Hauptschnitt-, Quer- und Vorschubkräfte beim Schneiden erzielt. Die geringeren Hauptschnitt- und Vorschubkräfte ermöglichen eine geringe Grat- bzw. Butzenbildung, aufgrund der niedrigeren Querkräfte wird eine gute Ebenheit der abgestochenen Werkstückspanfläche erreicht.

Weitere Ausführungsformen des Stecheinsatzes werden im folgenden beschrieben.

So besitzt vorzugsweise die Stufe eine obere waagerechte oder unter einem Winkel von bis zu 17° zur Stecheinsatzauflagefläche nach außen geneigte Oberfläche und eine zur Spanformmulde gerichtete Innenfläche. Die Stufe tritt, wie bereits erwähnt, erhaben aus den sie umgebenden Spanflächenbereichen hervor, wobei die höchste Erhebung eine Stufenhöhe zwischen 0,2 mm und 1,5 mm besitzt.

Nach einer weiteren Ausgestaltung der Erfindung ist die der Spanflächenmulde zugekehrte Innenfläche der Stufe ebenfalls eben und unter einem Winkel nach innen von bis zu 40° relativ zur Stecheinsatzauflagefläche geneigt. Die obere Oberfläche der Stufe und die Innenfläche weisen eine gemeinsame abgerundete Kante auf, die im wesentlichen parallel zur Stecheinsatzlängsachse läuft und deren Radius weniger als 3 mm, vorzugsweise 0,3 mm bis 1,0 mm und/oder 10 % bis 30 % der Stechbreite beträgt.

In einer Draufsicht auf die Spanfläche des Stecheinsatzes betrachtet ist die Stufe im wesentlichen linsenförmig, oval oder länglich-rund ausgebildet. Die Breite, der seitlichen Spanflächenrandteile (Randfasen) beträgt senkrecht der Stecheinsatzlängsachse an der Stirnschhneide weniger als 40 % der Stechbreite, vorzugsweise 25 bis 35 %, und nimmt im Bereich der Stufe um 30 bis 70 % ab. Die in Richtung der Stecheinsatzlängsachse gemessene Länge der Stufe ist größer als deren senkrecht dazu gemessene Breite, wobei die jeweils maximale Länge vorzugsweise 1,3- bis 1,7-fach der Länge der maximalen Breite beträgt. Die maximale Breite der Stufe beträgt nach einer Ausführungsform der Erfindung 15 bis 35 % der Stechbreite, vorzugsweise 20 bis 30 % der Stechbreite.

Die Stirnschneide kann vertikal zur Stecheinsatzlängsachse oder geneigt verlaufen, wobei der Neigungswinkel bis zu 18° beträgt, je nach Stechbreite, d.h., der Breite des Stecheinsatzes, werden unterschiedliche Neigungswinkel bevorzugt, und zwar bis zu 9° bei einer Stechbreite von bis zu 4 mm, bis zu 12° bei einer Stechbreite von bis zu 3 mm und 16 bis 18° bei einer Stechbreite von bis zu 2 mm.

Die Spanflächenrandteile, deren Länge, in Richtung der Längsachse betrachtet, von den Schneidecken zur Stirnschneidenmitte hin jeweils abnimmt (bedingt durch die Anordnung der erfindungsgemäßen Stufen), können in schneidkantenferneren Bereichen jeweils unter Bildung eines seitlichen, an die Nebenschneidkante jeweils angrenzenden Führungsteges als Schutzfase ansteigen. Die vordere, der Stirnseite des Stecheinsatzes zugewandte Kante dieser Führungsstege, über die diese in die vorderen Spanflächenrandteile übergeht, liegt etwa mittig in Höhe der jeweiligen Stufen, wobei diese vordere Kante der Anstiegsflanke im mittleren Drittel der Stufe, gesehen in Richtung der Längsachse des Stecheinsatzes, liegen kann. Die Fuhrungsstege besitzen Anstiegsflächen, die bereichsweise eben und/oder ballig konvex ausgebildet sind, was die Reibung des dort ablaufenden Spanes weiter minimiert.

Die Spanflächenrandteile sind in senkrechter Richtung zur Stirnschneide bzw. parallel zur Stecheinsatzlängsachse unter einem absolut kleineren Spanwinkel als dem Spanwinkel der Spanformmulde angeordnet. Der Spanwinkel der Spanflächenrandteile beträgt -10° bis zu +10°, vorzugsweise -5° bis +8°. Der Spanwinkel der Spanformmulde kann bis zu 30°, vorzugsweise 12° bis 23° betragen. Der Winkel, unter dem die Stufe in Richtung der Längsachse geneigt ist, liegt zwischen -10° und +10°, vorzugsweise zwischen -5° und +5°. Die Breite jedes der Führungsstege kann 10 bis 20 % der Stechbreite betragen. Die Muldentiefe, d.h., der vertikale Abstand der Schneidkantenebene zum tiefsten Muldenpunkt liegt zwischen 0,25 mm und 2 mm, vorzugsweise zwischen 0,3 mm bis 1,2 mm. Der Krümmungsradius der Mulde in Richtung der Stecheinsatzlängsachse liegt zwischen 1,2 und 12 mm, vorzugsweise zwischen 1,8 mm und 8 mm.

Der erfindungsgemäße Stecheinsatz kann so ausgebildet sein, daß er einen gemeinsamen Schaft besitzt, an dessen Ende jeweilige Stirnschneiden mit sich hieran anschließenden Spanablaufflächen der geschilderten Art anschließen.

Bei dem Stecheinsatz nach Anspruch 2 oder 3 ist nach einer weiteren Ausgestaltung der Erfindung vorgesehen, daß die Spanformelemente jeweils eine Oberkante aufweisen, die an die seitliche ebene Freifläche angrenzt und auf einer etwa der Spanflächenschutzflankenfasenbreite entsprechenden Breite teilweise gerade und/oder konvex gekrümmt verläuft, so daß der Abstand der Oberkante zur Schneidkante in Richtung zur Stecheinsatzlängsachse hin zunimmt. Der Tangentialwinkel, den die Oberkante mit der Stecheinsatzlängsachse bildet, wird vorzugsweise zwischen 90° und 75° gewählt. Dieser Winkel nimmt entsprechend der vorbeschriebenen konvexen Krümmung bis zum Ende der Schutzflankenfasenbreite um mindestens 10° auf Werte von 80° bis 65° (je nach Ausgangswinkel) ab.

Bei einem Stecheinsatz nach Anspruch 2 bis 21 oder einem Stecheinsatz nach Anspruch 1, liegt der Tangentialwinkel, den die Oberkante des Spanformelementes mit der Stecheinsatzlängsachse bildet, gemessen im Abstand der Breite der angrenzenden Schutzflankenfase zwischen 65° und 80° und nimmt im Fortlauf der Oberkante auf 35° bis 75° ab, die etwa im Abstand der 1 1/2-fachen Schutzflankenfasenbreite, von der Freifläche aus gesehen, gemessen werden. Anders ausgedrückt besitzt die Oberkante in dem der vorderen Schneidkante zugewandten Bereich bei der Ausführungsform nach Anspruch 2 eine nur leichte Krümmung, die dann in eine stärkere konvexe Krümmung zu einem Tangentialwinkel zwischen 5° und 30° übergeht.

Vorzugsweise laufen die der Spanformmulde zugewandten Innenflanken der Spanformelemente in Spanablaufrichtung betrachtet aufeinander zu, wobei die konvergierenden Flanken in diesem Teilbereich leicht gekrümmt oder auch eben sein können und die Oberkante einen Tangentialwinkel mit der Stecheinsatzlängsachse zwischen 5° und 30° bilden. Durch diese Ausgestaltung wird der Spanformmuldengrund nach der zunächst sprunghaften Verjüngung durch die Spanformelemente in einem daran anschließenden schneidkantenferneren Bereich kontinuierlich weiter verjüngt. Vorzugsweise liegt die Differenz der letztgenannten Tangentialwinkel der Oberkante zwischen 40° und 70°.

Nach einer weiteren Ausgestaltung der Erfindung bilden die der Schneidkante sowie die der Spanformmulde zugewandten Seitenflanken, d.h. die Vorder- und die Innenflächen der Spanformelemente in einer Seitenansicht gesehen, Steigungswinkel im Bereich zwischen 30° bis 70°, vorzugsweise 40° bis 60°. Entsprechend diesem Steigungswinkel wird der Span im Bereich der Seitenflanken bzw. im daran angrenzenden Bereich abgehoben und stoßartig über die Spanbreite gesehen durch plastische Verformung gestaucht. Durch die ballig gegenüber dem jeweiligen angrenzenden Spanflächengrund hervortretenden Spanformelemente wird verhindert, daß der Span, ohne daß er eine plastische Verformung erfährt, nur allmählich abgehoben wird, wobei die Gefahr der Bildung von Wirrspänen besteht.

Die gewünschte Wirkung der plastischen Verformung des ablaufenden Spans wird noch verstärkt, wenn die Steigungswinkel der Vorderflächen von den an die seitlichen Freiflächen angrenzenden Bereichen zu an die Spanformmulde angrenzenden Innenflächen zunehmen. In einer speziellen Ausführungsform besitzt der Stecheinsatz zumindest teilweise ballige konvexe Vorder- und Innenflächen mit Krümmungsradien >0,1 mm.

Die Oberkanten und/oder die ebenen, dort anschließenden Dachflächen der Spanformelemente besitzen gegenüber der Stirnschneide, die die Grenze zu der Spanflächenschutzflanke bilden, nach einer weiteren Ausgestaltung der Erfindung eine Höhe von 0,15 mm bis 1,5 mm, vorzugsweise von 0,3 mm bis 0,8 mm.

Die Spanformmulde bildet an ihrer der Schneidkante zugewandten Seite einen positiven Spanformwinkel, der zwischen 10° und 30°, vorzugsweise 17° bis 23° liegt. Die seitlichen Spanflächenschutzfasen weisen in schneidkantennahen Bereichen einen negativen Spanwinkel auf, der vorzugsweise zwischen 5° bis 15° liegt. Hierdurch wird eine hohe Schneideckenstabilität gewährleistet. Ein Optimum der plastischen Verformung des ablaufenden Spans wird erreicht, wenn die maximale Spanwinkeldifferenz zwischen der Spanformmulde und den seitlichen Spanflächenschutzflankenfasen größer als 27° ist.

Der senkrecht zur und auf die Stirnschneide gemessene Abstand der Fußkurve der Spanformvorderseite liegt vorzugsweise zwischen 0,35 mm bis 3,5 mm, weiterhin vorzugsweise zwischen 0,7 bis 1,8 mm.

Nach einer weiteren Ausgestaltung der Erfindung ist der Spanwinkel der Spanflächenschutzfasen in schneidkantennahen Bereichen von vorzugsweise 0,3 mm bis 2 mm, insbesondere 0,4 mm bis 1,4 mm Länge (in Spanablaufrichtung betrachtet) zunächst negativ, in einem daran anschließenden Bereich von vorzugsweise 0,1 bis 1 mm positiv, vorzugsweise zwischen 1° und 5° oder 0° und hieran anschließend wieder negativ ausgebildet. Alternativ hierzu schließt sich bei der Ausführung nach Anspruch 1 das Spanformelement mit negativem Spanformwinkel an.

Die Spanflächenschutzfase besitzt eine Breite zwischen 0,1 mm bis 2,0 mm, wobei vorzugsweise die Spanflächenschutzfasen an der Stirnschneide eine Breite von 6% bis 30% der Stechbreite, insbesondere das 1- bis 3-fache des Eckenradius besitzt. Nach einer weiteren Ausgestaltung besitzen die Spanflächenschutzfasen senkrecht zur Stirnschneide zu schneidkantenferneren Bereichen eine abnehmende Breite, die vorzugsweise degressiv abnimmt. Die abnehmende Fasenbreite in Verbindung mit dem positiven Spanwinkel der Spanformmulde bewirkt eine ideale Vorformung des Spanquerschnittes, wobei die seitlichen Spanränder "hochgebogen" werden. Hierdurch, wie durch die in Spanablaufrichtung gesehen angeordneten Spanformelemente, reduziert sich die Spanbreite gegenüber der Stechbreite. Die Breite der Spanflächenschutzfasen nimmt nach einer speziellen Ausführungsform der Erfindung bis auf 15% bis 50% relativ zur Breite der Spanflächenschutzfase an der Schneidkante ab. Die seitlichen Spanflächenschutzfasen weisen nach einer weiteren Ausgestaltung der Erfindung in einem schneidkantenferneren Bereich, insbesondere in dem Bereich unter einem positiven Spanwinkel, über einen Spanablaufweg von 2/10 bis 3/10 mm eine konstante Breite auf.

Zusätzlich kann zwischen der Stirnschneide und der Spanformmulde eine Fase angeordnet sein, die vorzugsweise eine Breite von 0,03 mm und 0,4 mm besitzt.

Die seitlichen und/oder die vordere Freifläche(n) sind unter einem positiven Freiwinkel von 5° bis 10° angeordnet. Die Muldentiefe, d.h. der vertikale Abstand der Schneidkantenebene zum tiefsten Muldenpunkt, liegt zwischen 0,05 mm und 1,5 mm, vorzugsweise 0,1 mm bis 0,5 mm, und/oder die Mulde besitzt einen Krümmungsradius zwischen 1 mm und 8 mm.

Der vorbeschriebene Stecheinsatz wird vorzugsweise zum Stechdrehen, wie zum Einstechen oder Tiefstechen, zum Schlitz- oder Trennfräsen und/oder zur Bearbeitung zäher oder hochlegierter Stahl- und NE-Werkstoffe verwendet.

Ausführungsbeispiele der Erfindung sind in den Zeichnungen dargestellt. Es zeigen:
- Fig. 1: eine Draufsicht auf einen erfindungsgemäßen Stecheinsatz,
- Fig. 2: eine Schnittansicht dieses Stecheinsatzes entlang der Linie I-I in Fig. 1,
- Fig. 3: eine Draufsicht von vorn, d.h. auf die Schneidkante des Stecheinsatzes nach Fig. 1,
- Fig. 4: eine Schnittansicht entlang der Linie II-II in Fig. 1,
- Fig. 5: eine perspektivische Ansicht des Schneideinsatzes nach Fig. 1 bis 4,
- Fig. 6: eine perspektivische Ansicht eines weiteren Schneideinsatzes und
- Fig. 7: einen Längsschnitt entlang der Längsmittelachse des Schneideinsatzes nach Fig. 6,
- Fig. 8: eine perspektivische Ansicht eines erfindungsgemäßen Schneideinsatzes mit einer senkrecht zur Schneideinsatzlängsachse verlaufender Stirnschneide,
- Fig. 9: eine perspektivische Ansicht eines Schneideinsatzes mit schrägem Stirnschneidenprofil,
- Fig. 10: eine Draufsicht auf den Schneideinsatz nach Fig. 8 oder Fig. 9,
- Fig. 11: eine Vorderansicht des Schneideinsatzes nach Fig. 8 bis 10,
- Fig. 12: einen Längsschnitt entlang der Linie V - V nach Fig. 11,
- Fig. 13: einen Längsschnitt des Schneideinsatzes entlang der Linie VI - VI nach Fig. 10,
- Fig. 14: einen Querschnitt des Schneideinsatzes nach Fig. 10 längs der Linie VII - VII und
- Fig. 15: einen Querschnitt des Schneideinsatzes nach Fig. 10 entlang der Linie VIII - VIII.

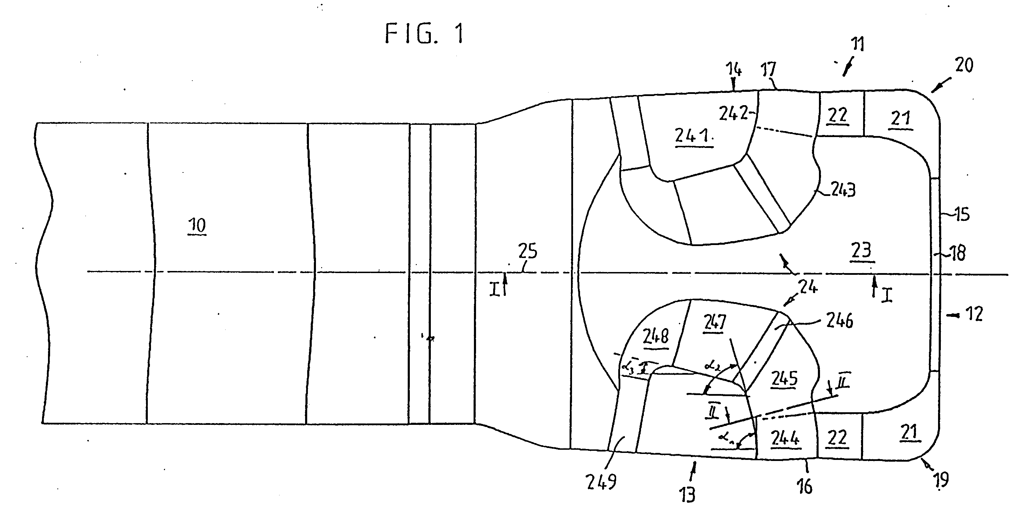

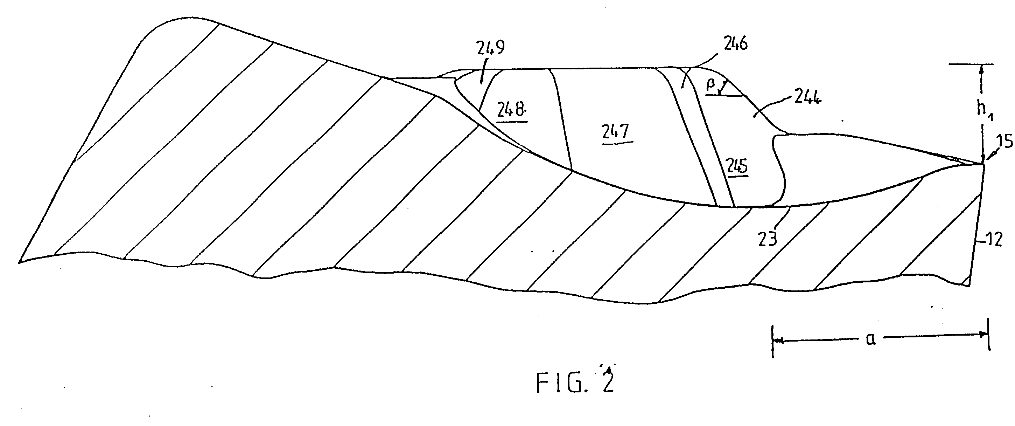

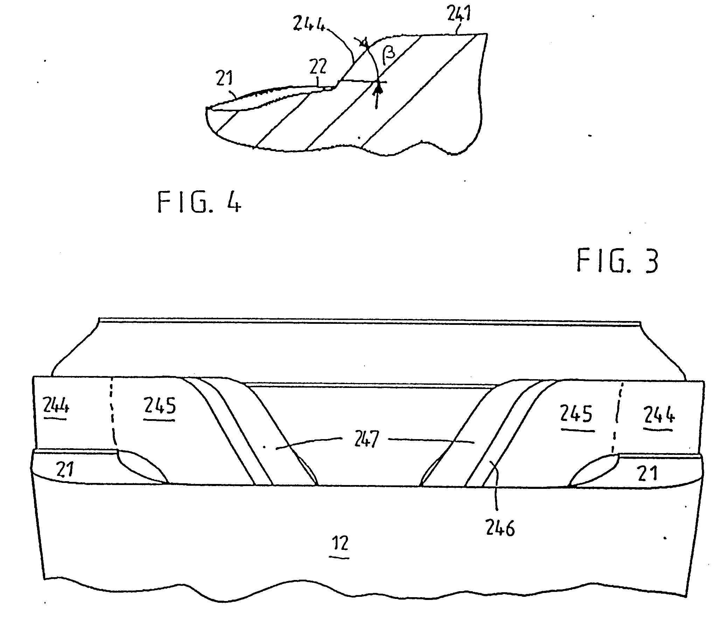

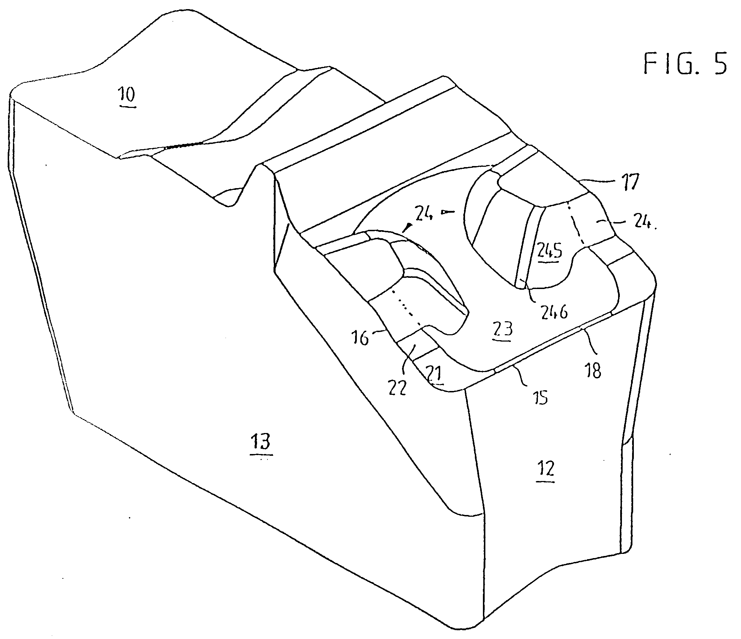

Der Schneideinsatz nach Fig. 1 bis 5 besitzt einen Schaft 10, an dessen vorderem Ende sich ein Schneidkopf 11 anschließt. Dieser Schneidkopf 11 besitzt eine vordere Freifläche 12 sowie seitliche Freiflächen 13 und 14, die ganz oder teilweise (siehe Fig. 5) unter einem positiven Freiwinkel angeordnet sein können. Die Spanfläche ist vorderseitig durch die Schneidkante bzw. Stirnschneide 15 sowie durch seitliche Kanten 16 und 17 begrenzt. An die Stirnschneide 15 schließt sich eine Fase 18 konstanter Breite zwischen 0,03 mm und 0,4 mm an. Zu den Schneidecken 19 und 20 hin grenzt eine seitliche Spanflächenschutzfase 21 an, deren Breite sich in Spanablaufrichtung, d.h. zum Schaft 10 hin, zunächst verjüngt und in dem sich anschließenden Bereich 22 konstant bleibt. Hierdurch ergibt sich in Richtung weg von der Stirnschneide 15 eine abnehmende Spanflächenschutzfasenbreite. Inmitten der genannten Bereiche 21 und 22 liegt eine konkav geformte Spanformmulde 23, deren Krümmungsradien in Längsrichtung des Stecheinsatzes unterschiedlich von den Krümmungen in dazu senkrechter Richtung, d.h. parallel zur Schneidkante 15, sein können. Die Spanflächenschutzfase 21 ist jeweils unter einem negativen Spanformwinkel angeordnet, während die Spanflächenschutzfase im Bereich 22 einen Spanwinkel von 0° oder leicht positiven Winkel zwischen 1° und 5° aufweisen kann. Rückwärtig schließt sich jeweils beidseitig ein Spanformelement 24 an, das beidseitig zu den Freiflächen 13 und 14 abschließt und an der zur Spanformmulde 23 zugewandten Seite so weit hervorsteht, daß es die Spanflächenschutzfasen 21, 22 deutlich überragt und weit in die Spanformmulde 23 hineinragt. Die beidseitigen Spanformelemente 24 sind symmetrisch zur Stecheinsatzlängsachse 25 angeordnet und bilden in dem dazwischenliegenden Bereich einen schmalen torartigen Durchgang für den ablaufenden Span. Die Spanformelemente 24 besitzen jeweils eine Dachfläche 241. Die Dachfläche 241 wird durch eine Oberkante 242 begrenzt, der in entsprechender Weise die Fußkurve 243 nach Maßgabe der Krümmung der Spanformmulde 23 folgt. Die zwischen der Oberkante 242 und der Basiskurve 243 liegenden Seitenflanken können in mehrere Bereiche aufgeteilt werden, die in Spanablaufrichtung durch die Winkel α₁, α₂ und α₃ gekennzeichnet sind. Auf einer etwa der Breite des Spanflächenschutzfasenbereiches 22 entsprechenden Länge ist die Oberkante 242 schwach gekrümmt, wobei der Winkel α₁ von 90° bis 75° um bis zu 10° auf 80° bis 65° abnimmt. Dieser Bereich 244 bestimmt die Vorderfläche der Seitenflanke, die in Spanablaufrichtung gesehen hinter den Spanflächenschutzflanken 22 die seitlichen Spanbereiche verformt. An den ersten Bereich schließt sich ein Bereich 245 stärkerer Krümmung, dessen Endpunkt durch den Winkel α₂ bestimmt ist. Der Winkel α₂ sinkt in diesem Bereich auf etwa 75° bis 35°. Hieran schließt sich ein Bereich 246 starker Krümmung als Übergangsbereich zu einem geradlinigen Oberkantenstück 247, das unter einem Winkel α₃ von 5° bis 30° geneigt ist. Durch die Größe des Winkels α₃ ergibt sich ein weiterer Verjüngungsbereich für den ablaufenden Span. Im hinteren Bereich ist die Oberkante 242 abermals scharf gekrümmt und schließt schließlich geradlinig an den jeweiligen Freiflächen 13 oder 14 an. Der Schnittansicht nach Fig. 2 entlang der Linie I-I ist der Steigungswinkel β, den die Vorderfläche 244 bildet, zu entnehmen. Dieser Steigungswinkel liegt zwischen 30° und 70°, vorzugsweise im Bereich zwischen 40° und 60° im vorliegenden Fall wurden 50° gewählt. Die Spanformelemente 24 besitzen jedoch keine durchgehend ebenen Seitenflanken 244 bis 248, vielmehr sind diese Flanken in vertikaler Richtung zur Spanformebene zumindest teilweise ballig, d.h. konvex ausgebildet. Lediglich im an die Basiskurve 243 abgrenzenden Bereich sind sie konkav gekrümmt. Von der Vorderfläche 244 zu der Innenfläche 247 nehmen die Steigungswinkel β zu, was anhand der Schnittansicht nach Fig. 4 erkennbar ist, in der der Steigungswinkel β ca. 55° beträgt. Die Höhe h₁ von der Oberkante 242 gegenüber der Schneide 15 liegt im Bereich von 0,3 mm bis 0,8 mm. Der Abstand a von der Schneidkante 15 zur Fußkurve 243 im Bereich der Vorderfläche 244 liegt zwischen 0,7 mm und 1,8 mm. Die Differenz δ der negativen Spanwinkel der Spanflächenschutzfase 21 zu den positiven Spanformwinkeln der Mulde wird vorzugsweise größer als 27° gewählt.

Fig. 3 ist zusätzlich zu entnehmen, wie die Flächen 245 bis 247 konvergierend in Spanablaufrichtung aufeinander zulaufen, wodurch der Grund der Spanformmulde 23 weiter eingeengt wird. Die vordere Schneidkante 15 ist im dargestellten Ausführungsbeispiel gerade ausgebildet und wird seitlich durch die Schutzfasenbereiche 21 begrenzt, deren Breite an der Stirnschneide jeweils 6% bis 30% der Stechbreite sowie das 1- bis 3-fache des Eckenradius beträgt. Durch die in Richtung weg von der Stirnschneide 15, d.h. in Spanablaufrichtung abnehmende Fasenbreite in Verbindung mit dem positiven Spanwinkel der Spanformmulde erfolgt eine Vorformung des Spanquerschnittes, bei dem die Spanränder seitlich hochgebogen werden. Hierdurch reduziert sich bereits im vorderen Bereich die Spanbreite gegenüber der Stechbreite. Die Winkel α₁ und α₂ der Torvorderseiten korrespondieren mit der vorgeformten Spanunterseite. Durch die Spanformelemente 24 erfahren die Späne eine weitere Stauchung, wobei der Span in der Werkstücknut optimal geführt wird. Nach dem Anlaufen des freien Spanendes an den Nutgrund setzt die Spiralspanbildung ein, wobei zusätzliche Biegungskräfte und - momente wirken, die den Span zwischen die durch die Spanformelemente 24 gebildeten Torinnenseiten (vgl. Flächen 247) drücken, und zwar so weit, wie es die Duktilität des Werkstoffes und die Spandicke, die aus dem gewählten Vorschub resultiert, zulassen. Die vorgeformte Sicke im Spanquerschnitt wird durch die Torinnenseiten (Flächen 247) verstärkt, zugleich wird die Spanbreite weiter reduziert und die Spanführung verbessert. Durch die innen unter dem Winkel α₂ angeordneten Torvorderseiten wird der Mechanismus der Spanquerschnittsverformung erleichtert, wobei ein Spänestau bzw. Werkstoffverklebungen wirksam vermieden werden können. Der sickenförmige Spanquerschnitt, der durch das erfindungsgemäße Stechwerkzeug erreicht wird, trägt wesentlich zu einem prozeßsicheren Spanbruch bei. Die Oberflächen der seitlichen Schutzfasen 21,22 sind im Querschnitt parallel zur Stirnschneide 15 geradlinig ausgebildet.

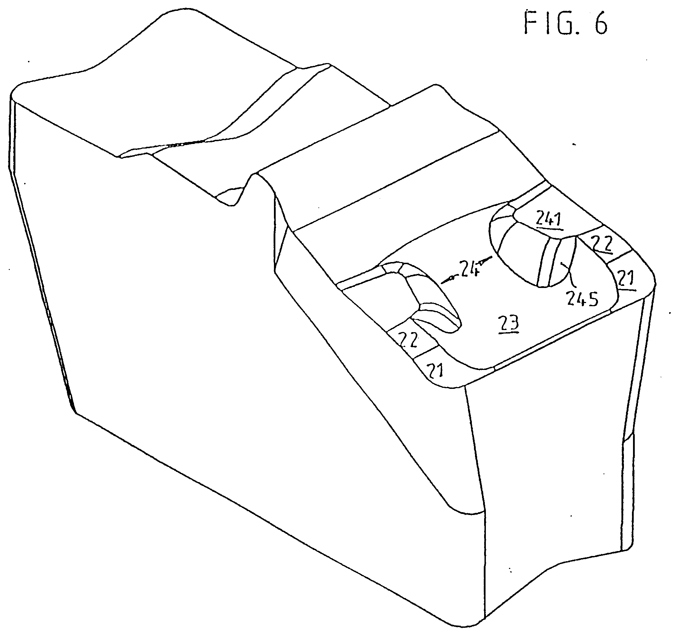

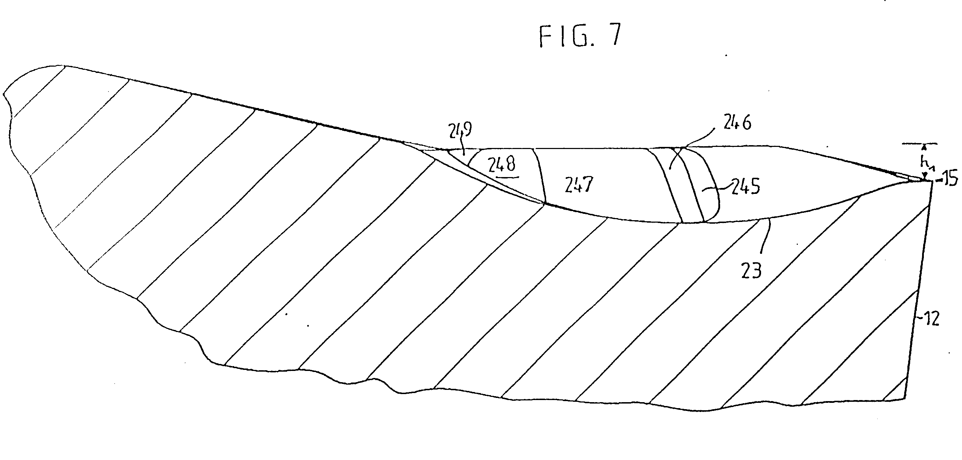

Die Ausführungsform nach Fig. 6 und 7 unterscheidet sich von der Ausführungsform nach Fig. 1 bis 5 dadurch, daß das Spanformelement 24, das sich dem Spanflächenschutzfasenbereich 22 anschließt, eine geringere Höhe hat, die etwa der Höhe des Spanflächenschutzfasenbereiches 22 entspricht bzw. in der gleichen Ebene liegt. Im übrigen gilt Entsprechendes für gleiche Bezugszeichen. Der Dachbereich 241 nimmt im vorliegenden Fall positive Winkel an (siehe Fig. 7).

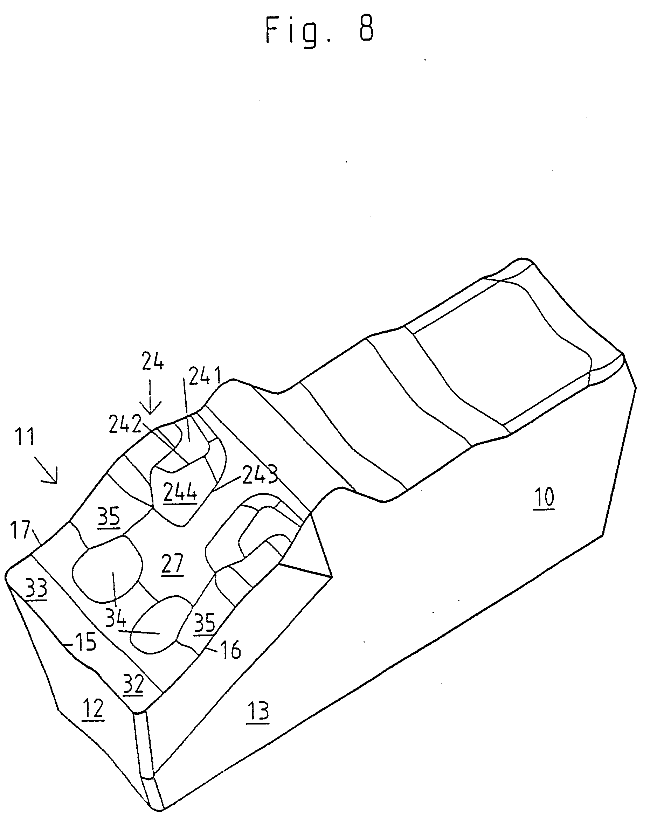

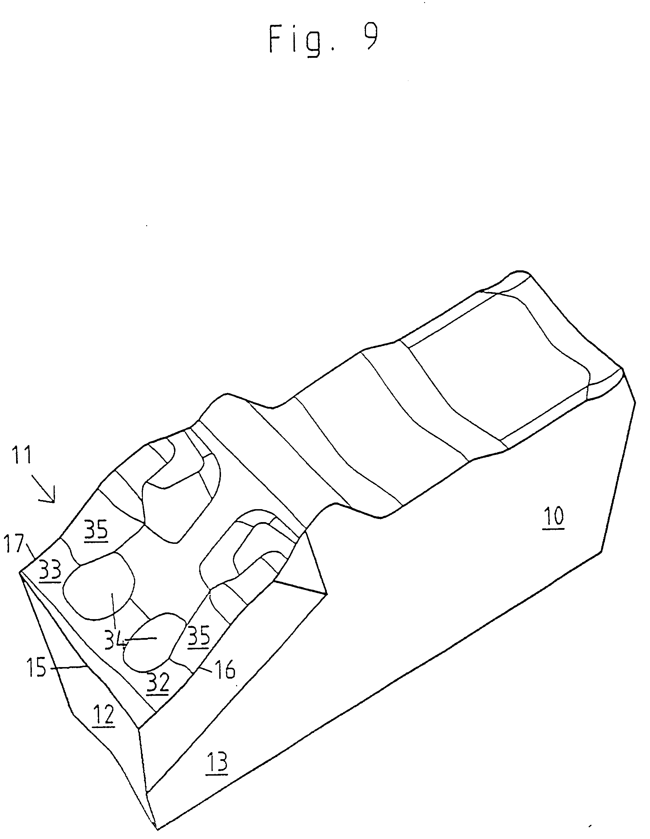

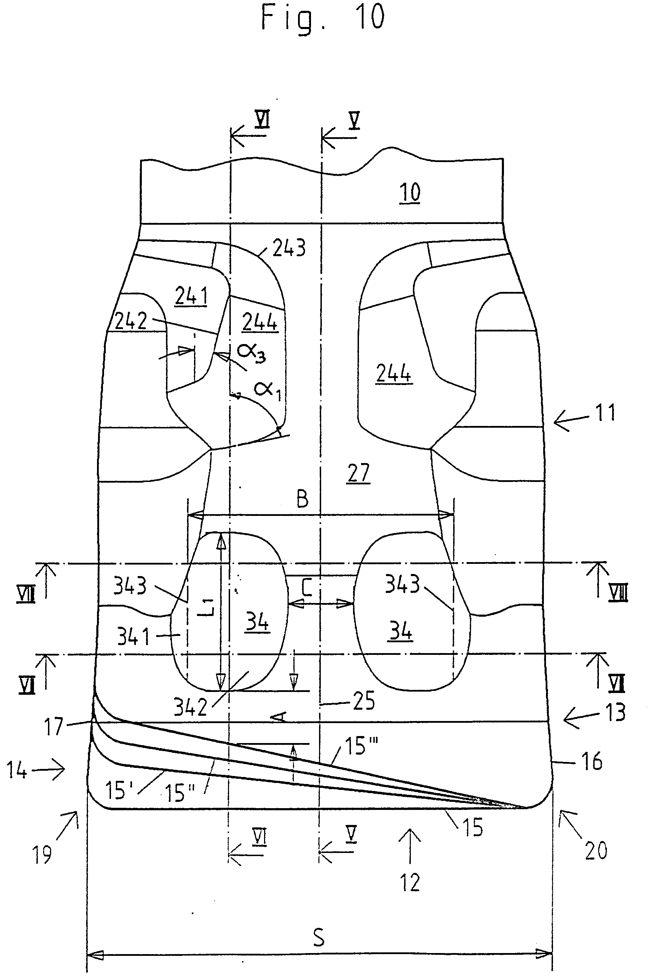

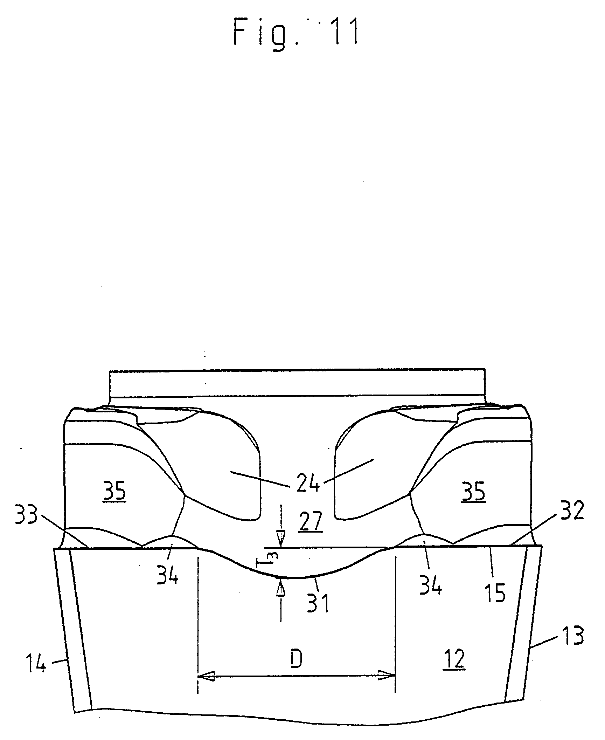

Der Schneideinsatz nach Fig. 8 bis 15 besitzt einen Schaft 10, an dessen vorderem Ende sich ein Schneidkopf 11 anschließt, der eine vordere Freifläche 12 sowie seitliche Freiflächen 13 und 14 besitzt, die ganz oder teilweise unter einem positiven Freiwinkel angeordnet sein können. Die Spanfläche wird vorderseitig durch die Schneidkante bzw. Stirnschneide 15 sowie durch seitliche Kanten 16 und 17 begrenzt. Die Stirnschneide 15 geht über Schneidecken 19 und 20 in die seitlichen Kanten 16 und 17 über. In Fig. 10 sind neben einer senkrecht zur Stecheinsatzlängsachse 25 verlaufenden Stirnschneide 15 schräg verlaufende Stirnschneiden 15', 15'' und 15''' exemplarisch dargestellt, die durch vorderseitiges Abschleifen hergestellt werden können. Die jeweiligen Abschrägungswinkel, d.h., die Winkel zwischen der Linie 15 und 15' bzw. 15'' oder 15''' liegen je nach Stechbreite in der Größenordnung bis zu 18°. Der Schneideinsatz besitzt, wie insbesondere aus Fig. 11 ersichtlich, eine konkave Spanformmulde 31, die etwa mittig der Stirnschneide 15 bis 15', 15'' oder 15''' angeordnet ist und diese Stirnschneide durchbricht. Der Radius dieser Spanformmulde senkrecht zur Stecheinsatzlängsachse liegt zwischen 0,5 mm und 6 mm, vorzugsweise 0,6 bis 3 mm. Seitlich der Spanformmulde 31 liegen Spanflächenrandteile 32 und 33 etwa in der Art einer seitlichen Fase, deren Länge in Richtung parallel zur Stecheinsatzlängsachse 25 zur Mitte hin abnimmt. Zwischen den Spanflächenrandteilen 32 und 33 und der Spanformmulde 31 liegen jeweils im Abstand von der Stirnschneide 15, 15', 15'' oder 15''' Stufen 34, die bezogen auf eine Längsmittelachse achsensymmetrisch und spiegelsymmetrisch angeordnet sind. In der Draufsicht sind diese Stufen 34 linsenförmig ausgebildet. Diese Stufen 34 stellen erhabene Spanformelemente dar, deren innerer Abstand C (siehe Fig. 10) zwischen 10 und 20 % der Stechbreite S liegt. Die Stufen 34 befinden sich in einem Abstand A von der Schneidkante, der mindestens 0,1 mm, vorzugsweise 0,2 mm und/oder größer als 3 % der Stechbreite S, weiterhin vorzugsweise mehr als 5 % der Stechbreite S beträgt. Dieser Abstand A wird bei abgeschrägten Stirnschneiden 15', 15'' oder 15''' als minimaler Abstand an der kürzeren Seite gemessen. Die Stufe 34 kann sich aus einer oberen waagerechten oder in Richtung senkrecht zur Längsachse 20 gemessen unter einem Winkel λ von bis zu 17° geneigten Oberfläche 341 sowie einer weiteren entgegengesetzt geneigten Innenfläche 342 zusammensetzen, die unter Bildung einer abgerundeten Kante 343 aneinanderstoßen, deren Radius <3 mm beträgt. Der Neigungswinkel der Innenflächen 342 senkrecht zur Längsachse 20 gemessen liegt zwischen 20 und 40°, vorzugsweise 25 bis 35°. Die Länge L₁ der Stufen 34 wird bevorzugt zwischen 20 und 40 % der Stechbreite S, weiterhin vorzugsweise zwischen 30 und 35 % gewählt. Der Abstand B der in Längsrichtung verlaufenden Kanten 343 ist um 5 bis 30 %, vorzugsweise 10 bis 20 %, größer als die Breite D der Spanformmulde 31, die als Schneidenhohlkehle ausgebildet ist.

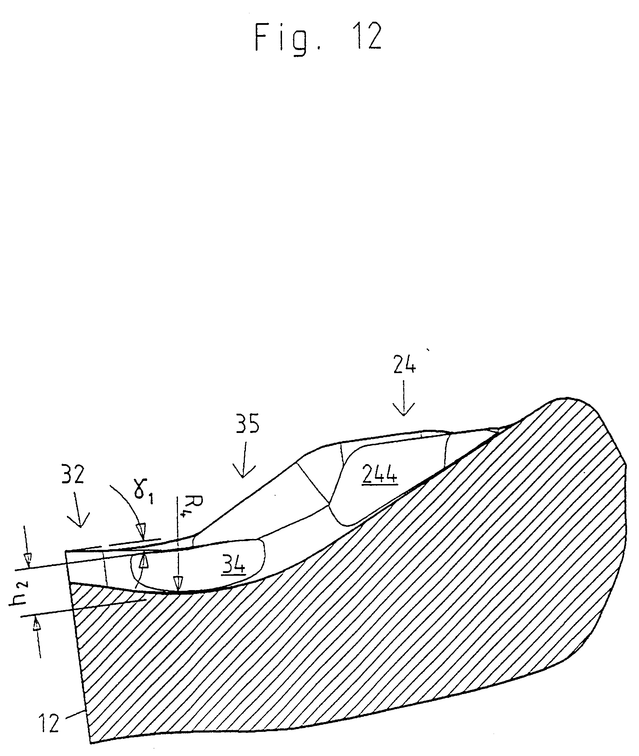

Der Spanwinkel γ₁ der Spanflächenrandteile 32 und 33 ist aus Fig. 12 ersichtlich und liegt zwischen -10° und +10°, vorzugsweise -5° und +8°. Etwa in demselben Bereich liegt der Neigungswinkel der Stufenflächen 341 und 343 in Richtung der Längsachse 25 gemessen, wobei dieser Neigungswinkel vorzugsweise zwischen -5° und +5° liegen sollte.

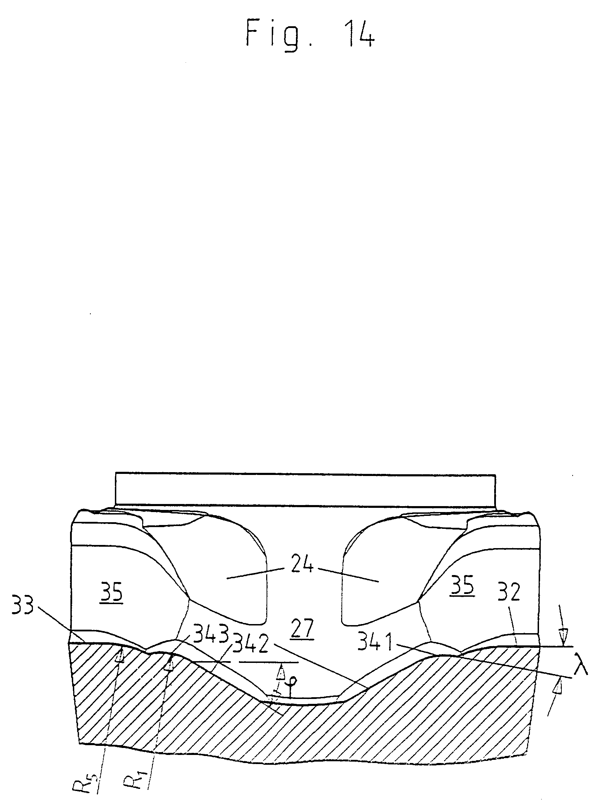

Der aus Fig. 14 ersichtliche Radius R₁ der in Längsrichtung verlaufenden Kanten 343 der Stufenflächen 341 und 342 liegt zwischen 0,3 und 3 mm, vorzugsweise 0,4 bis 1 mm und/oder zwischen 10 und 30 % der Stechbreite. Aus dieser Figur ist auch der Neigungswinkel ϕ der Flächen 342 ersichtlich, der bis zu 40° betragen kann. Die Spanflächenrandteile 32 und 33 sind vorzugsweise ebenfalls im Übergangsbereich zur Stufe konvex ausgestaltet, insbesondere unter einem Radiuswinkel R₅ von 0,3 bis 3 mm, vorzugsweise 0,5 bis 2 mm.

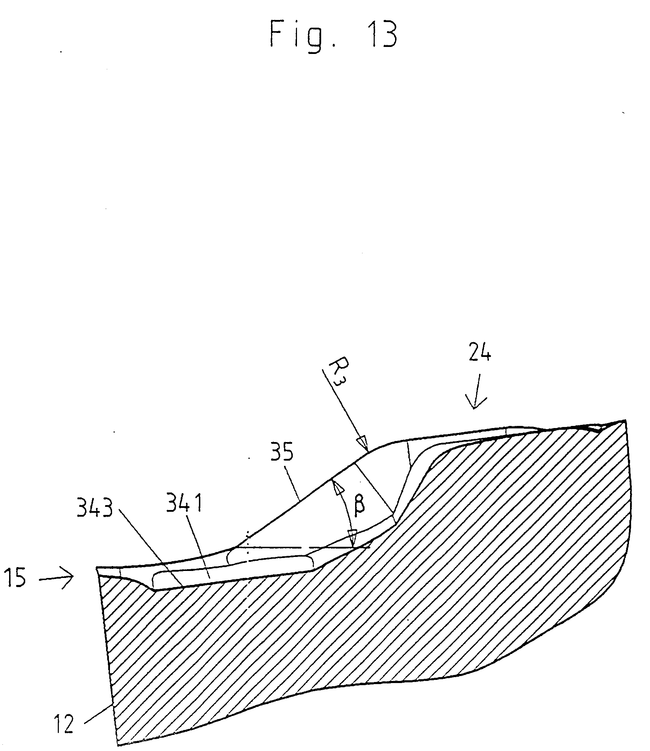

Im Anschluß an die Spanflächenrandbereiche 32 und 33 und etwa, in Spanablaufrichtung betrachtet, mittig zu den Stufen 24 sind an die seitlichen Kanten 16 und 17 angrenzend Führungsstege 35 vorgesehen, deren aus Fig. 13 ersichtlicher Anstiegswinkel β zwischen 20 und 40°, vorzugsweise 25 bis 35° liegt. Im Anschluß an die Anstiegsflanke gehen diese Führungsstege in einen im wesentlichen parallel zur Stecheinsatzauflagefläche und/oder zu den Spanflächenrandteilen liegenden Bereich unter Bildung einer Radiuskrümmung R₃ von 0,4 bis 4 mm, vorzugsweise 0,6 bis 1 mm über.

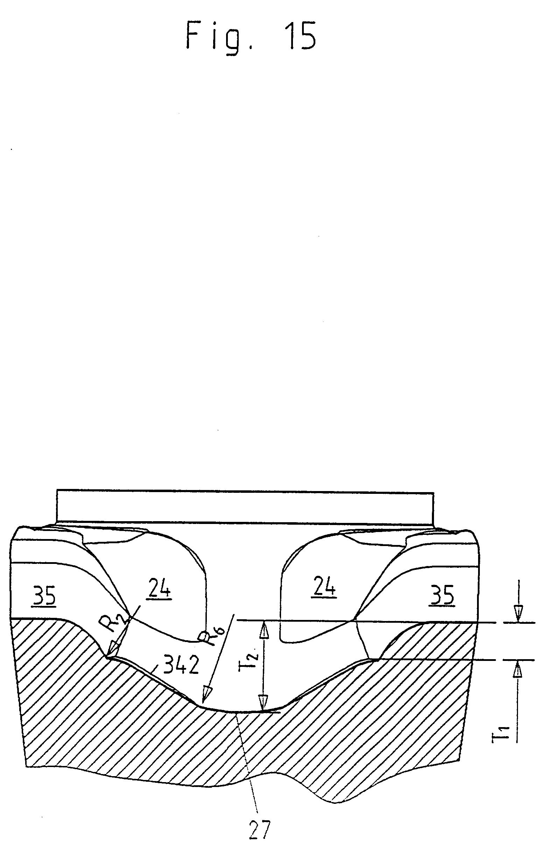

Wie aus Fig. 15 ersichtlich, fallen die seitlichen Führungsstege 35 mit ihren inneren Neigungsflächen zur Spanflächenmitte hin ab, wo sie konvex verlaufen und über einen konkaven Radius R₂ in die obere Fläche der Stufe 341 oder unmittelbar in die abgerundete Kante 343 übergehen. Diese Oberfläche kann unter einem positiven oder negativen Winkel von bis zu 10° geneigt sein. Die Innenflächen 342 gehen ebenfalls über konkave kleine Muldenradien R₆, die zwischen 0,15 und 1,5 mm, vorzugsweise zwischen 0,2 und 0,6 mm, liegen, in die mittlere Spanformmulde über. Der konkave Muldenradius nimmt ausgehend von der Stirnschneide bis etwa zur Höhe der Schnitte VII und VIII um 20 % bis 100 % zu und/oder dahinter um den Betrag von 20 % bis 100 % ab. Der Abstand T₁ der oberen Stufenfläche 341 gegenüber der Schneidenhöhe bzw. gegenüber den Führungsstegen 35 liegt zwischen 0,03 und 0,5 mm, vorzugsweise zwischen 0,05 und 0,2 mm. Die Tiefe T₂ der Mulde, gemessen in Höhe des Schnittes VIII - VIII beträgt gegenüber der Schneide 0,25 bis 2 mm, vorzugsweise 0,3 bis 1,2 mm.

Die aus Fig. 11 ersichtliche Tiefe T₃ der Schneidenhohlkehle beträgt 0,08 bis 0,6 mm, vorzugsweise 0,1 bis 0,3 mm. Die unter Bildung eines Radius R₄ zwischen 1,2 bis 12 mm, vorzugsweise 1,8 bis 8 mm, (siehe Fig. 12) in Längsrichtung konkav ausgebildete Spanformmulde wird seitlich durch die Stufen 34 im, in Spanablaufrichtung gesehen, dahinterliegenden Bereich durch die Seitenflanken der Führungsstege 35 und schließlich durch nasenförmige Spanformelemente 24 begrenzt, die jeweils eine Dachfläche 241, die durch eine Oberkante 242 begrenzt wird, deren Kontur in entsprechender Weise der unteren Fußkurve 243 nach Maßgabe der Krümmung der Spanformmulde 27 folgt, die den Anschluß zu der Spanformmulde 31 darstellt. Die zwischen der Oberkante 242 und der Fußkurve 243 liegenden Seitenflanken 244 können in mehrere Bereich aufgeteilt werden, die in Spanablaufrichtung durch die Winkelwerte α₁ und α₃ gekennzeichnet sind, wobei der Winkel α₁ von 90 bis 75° um bis zu 10° auf 80 bis 65° abnimmt und schließlich auf etwa 75 bis 35° ändert. Die jeweiligen Seitenflächen 244 der nasenförmigen Spanformelemente sind ballig-konvex ausgeführt und verjüngen die Spanformmulde 27 mit der Folge, daß der ablaufende Span in seiner Breite weiter reduziert und die Spanführung verbessert wird. Die gegenüberliegenden Seitenflächen 244 und die Stufen 34 liegen etwa, in Richtung der Längsachse 25 gesehen, in miteinander fluchtenden Bereichen. Hierdurch ergeben sich für die Dimensionierungen der nasenförmigen Spanformelemente 24 entsprechende Maße aus vorstehenden Angaben.

## Patentansprüche

1. Stecheinsatz zur spanabhebenden Bearbeitung von Werkstücken, mit einer vorderen, quer zur Stecheinsatzlängsachse (25) angeordneten Schneidkante (15,15',15'', 15'''), einer mittleren konkaven Spanformmulde (23, 27), die seitlich durch Spanflächenschutzflanken (21,22,32,33) begrenzt wird, wobei im Anschluß an jede der Spanflächenschutzflanken (21,22,32,33) zur Spanformmulde (23,27) hin gerichtete und in diese hineinragende erhabene Spanformelemente (24) vorgesehen sind, die sich spiegelsymmetrisch zur Schneideinsatzlängsachse (25) gegenüberliegen und die die Spanformmuldengrundfläche in Spanablaufrichtung verjüngen,
**dadurch gekennzeichnet**,
daß die erhabenen Spanformelemente (24) nasenförmig in die Spanformmulde (23,27) hineinragen und diese sprunghaft, vorzugsweise unstetig in Spanablaufrichtung verjüngen, wobei der Tangentialwinkel, den die Oberkante (242) des Spanformelementes (24) mit der Stecheinsatzlängsachse (25) bildet, gemessen im Abstand der Breite der angrenzenden Spanflächenschutzflankenfase (22,32,33) von größeren Anfangswerten (α₁) auf (α₂) 35° bis 75°, gemessen etwa im Abstand der 1 1/2-fachen Spanflächenschutz-flankenfasenbreite, abnimmt und schließlich in eine geradlinige Kante übergeht, die unter einem Winkel (α₃) von 5° bis 30° zur Stecheinsatzlängsachse (25) geneigt ist.

2. Stecheinsatz nach Anspruch 1, dadurch gekennzeichnet, daß die Spanformelemente ballige Seitenflächen (244 bis 249) aufweisen, daß die Spanformelemente (24) die Spanflächenschutzflanken (22) sowohl in der Höhe als auch in der Breite überragen und daß die Spanformelemente (24) jeweils eine Oberkante (242) aufweisen, die an die seitliche ebene Freifläche (13,14) angrenzt und auf einer etwa der Spanflächenschutzflankenfasenbreite entsprechenden Breite teilweise gerade und/oder konvex gekrümmt verläuft, so daß der Abstand der Oberkante (242) zur Schneidkante (15) in Richtung zur Stecheinsatzlängsachse (25) hin zunimmt.

3. Stecheinsatz nach Anspruch 1 oder 2, dadurch gekennzeichnet, daß zwischen den Spanflächenschutzflanken (32, 33) und der Spanformmulde (31, 27) jeweils im Abstand (A) von mehr als 0,1 mm oder mehr als 3 % der Stechbreite in (S) von der Stirnschneide (15, 15', 15'', 15'''), die senkrecht oder schrägwinklig zur Stecheinsatzlängsachse angeordnet sein kann, eine Stufe (34) angeordnet ist, die vorzugsweise eine obere waagerechte oder unter einem Winkel von bis zu 17° zur Stecheinsatzauflagefläche in Richtung senkrecht zur Längsachse (25) geneigte Oberfläche (341) und eine zur Spanformmulde (31) gerichtete Innenfläche (342) aufweist, wobei die Stufe (34) vorzugsweise eine Stufenhöhe (h₂) von 0,2 bis 1,5 mm aufweist und/oder die Innenfläche (342) eben ist und in senkrechter Richtung zur Längsachse (25) unter einem Winkel (ϕ) von 20 bis 40°, vorzugsweise 25 bis 35°, relativ zur Stecheinsatzauflagefläche geneigt ist.

4. Stecheinsatz nach einem der Ansprüche 1 bis 3, dadurch gekennzeichnet, daß die Stirnschneide (15) gegenüber einer vertikalen Ebene zur Stecheinsatzlängsachse (25) bis zu 18° geneigt ist, vorzugsweise bis zu 9° bei einer Stechbreite von bis zu 4 mm, bis zu 12° bei einer Stechbreite von bis zu 3 mm und bis 16° bei einer Stechbreite von bis zu 2 mm.

5. Stecheinsatz nach einem der Ansprüche 1 bis 4, dadurch gekennzeichnet, daß im Abstand von der Stirnkante (15) die Spanflächenrandteile (32, 33) unter Bildung eines seitlichen an die Nebenschneidkante (16, 17) angrenzenden Führungssteges (35) als Schutzfasen ansteigen.

6. Stecheinsatz nach einem der Ansprüche 3 bis 5, dadurch gekennzeichnet, daß die Spanflächenrandteile (32, 33) senkrecht zur Stirnschneide (15) unter einem absolut kleineren Spanwinkel als dem Spanwinkel der Spanformmulde angeordnet sind, wobei vorzugsweise der Spanwinkel (γ₁) der Spanflächenrandteile (32, 33) zwischen -10° und +10°, vorzugsweise -5° und +5° liegt und/oder der Spanwinkel der Spanformmulde (31) bis zu 30°, vorzugsweise 17 bis 23°, beträgt und/oder der Winkel, unter dem die Stufe (34) in Richtung der Längsachse (25) geneigt ist, zwischen -10° und +10°, vorzugsweise -5° und +8°, beträgt.

7. Stecheinsatz nach einem der Ansprüche 3 bis 6, dadurch gekennzeichnet, daß die Stufenflächen (34) etwa mit den nasenförmigen Spanformelementen (24) fluchten.

8. Stecheinsatz nach einem der Ansprüche 1 bis 7, dadurch gekennzeichnet, daß der Tangentialwinkel, den die Oberkante (242) des Spanformelementes mit der Stecheinsatzlängsachse (25) bildet, gemessen im Abstand der Breite der angrenzenden Schutzflankenfase (22) von Anfangswerten zwischen 65° und 80° auf 35° bis 75°, gemessen etwa im Abstand der 1 1/2 fachen Schutzflankenfasenbreite, abnimmt und/oder daß die der Spanformmulde (23) zugewandten Innenflanken (245,246,247) der Spanformelemente (24) in Spanablaufrichtung betrachtet aufeinander zulaufen, wobei die Flanken in diesem Teilbereich leicht gekrümmt oder auch eben sein können, wobei vorzugsweise die Oberkante (242) einen Tangentialwinkel (α₃) mit der seitlichen Freifläche (13,14) zwischen 5° und 30° bildet.

9. Stecheinsatz nach einem der Ansprüche 1 bis 8, dadurch gekennzeichnet, daß die der Schneidkante (15) sowie die der Spanformmulde (23) zugewandte Seitenflanke (244 bis 247), d.h. die Vorder- und die Innenflächen der Spanformelemente (24), in einer Seitenansicht gesehen Steigungswinkel (β) im Bereich zwischen 30° bis 70°, vorzugsweise 40° bis 60° bilden und/oder daß die Steigungswinkel (β) der Vorderflächen (244) von den an die seitlichen Freiflächen (13,14) angrenzenden Bereichen zur an die Spanformmulde (23) angrenzenden Innenflächen (245,246,247) zunehmende Steigungswinkel (β) aufweisen.

10. Stecheinsatz nach einem der Ansprüche 1 bis 9, dadurch gekennzeichnet, daß die Spanformmulde (23) an ihrer der Schneidkante (15) zugewandten Seite einen positiven Spanformwinkel bildet.

11. Stecheinsatz nach einem der Ansprüche 1 bis 10, dadurch gekennzeichnet, daß die maximale Spanwinkeldifferenz zwischen der Spanformmulde und den seitlichen Spanflächenschutzflanken größer als 27° ist und/oder daß der Abstand (a) von der Schneidkante (15) zur Basiskurve (243) im Bereich der Vorderfläche (244) zwischen 0,35 mm und 3,5 mm, vorzugsweise zwischen 0,7 mm und 1,8 mm, liegt.

12. Stecheinsatz nach einem der Ansprüche 1 bis 11, dadurch gekennzeichnet, daß der Spanwinkel der Spanflächenschutzfasen im schneidkantennahen Bereich (21) von vorzugsweise 0,3 mm bis 2 mm, insbesondere 0,4 mm bis 1,4 mm Länge zunächst negativ, in einem daran anschließenden Bereich (22) von vorzugsweise 0,1 mm bis 1 mm positiv, vorzugsweise zwischen 1° und 5° oder 0° und hieran anschließend wieder negativ ausgebildet ist oder hieran anschließend das Spanformelement angeordnet ist.

13. Stecheinsatz nach einem der Ansprüche 1 bis 12, dadurch gekennzeichnet, daß die Spanflächenschutzfasen (21,22) senkrecht zur Stirnschneide (15) zu schneidkantenferneren Bereichen eine abnehmende Breite, vorzugsweise degressiv abnehmende Breite haben, wobei vorzugsweise die Breite bis auf 15% bis 50% relativ zur Breite der Spanflächenschutzfase (21) an der Schneidkante abnimmt und/oder wobei vorzugsweise seitliche Spanflächenschutzfase in einem schneidkantenferneren Bereich (22) über einen Spanablaufweg von 0,1 mm bis 1 mm einen konstante Breite aufweist.

14. Stecheinsatz nach einem der Ansprüche 1 bis 13, dadurch gekennzeichnet, daß die seitlichen (13,14) und/oder die vordere Freifläche(n) (12) unter einem positiven Freiwinkel von 2° bis 15° angeordnet sind.

15. Verwendung des Stecheinsatzes nach Ansprüchen 1 bis 14 zum Stechdrehen, vorzugsweise zum Einstechen oder Tiefstechen, zum Schlitz- oder Trennfräsen und/oder zur Bearbeitung zäher oder hochlegierter Stahl- und NE-Werkstoffe.

## Claims

1. Recessing insert for chip-removing machining of workpieces with a front cutting edge (15, 15', 15'', 15''') extending transversely of the recessing-insert longitudinal axis (25), a central concave chip-forming recess (23, 27) which is laterally defined by chip-surface protective lands (21, 22, 32, 33), wherein raised nose-shaped chip-forming elements (24) are provided adjacent each of the chip-surface protective lands (21, 22, 32, 33), directed toward the chip-forming recess (23, 27) and projecting into the chip-forming recess, mirror-symmetrically flanking the recessing-insert longitudinal axis (25), and narrowing the chip-forming recess base surface in the chip-travel direction,
**characterised in that**
the raised chip-forming elements project nose-like into the chip-forming recess (23, 27) and narrow the chip-forming recess in the chip-travel direction in a step, preferably in a discrete quantity, whereby the tangential angle which forms the upper edge (242) of the chip-forming element (24) with the recessing-insert longitudinal axis (25), measured at a spacing of the width of the defining chip-surface protective flank land (22, 32, 33) decreases from greater starting values (α₁) to (α₂) 35° to 75°, measured approximately at a spacing of the 1½ times the chip-forming protective-flank land width and finally ends in a straight edge which is inclined at an angle (α₃) of 5° to 30° in relation to the recessing-insert longitudinal axis (25).

2. Recessing-insert according to claim 1, characterised in that the chip-forming elements (24) have convex side flanks (244 to 249), that the chip-forming elements (24) project in height and width beyond the chip-surface protective flanks (22) and that the chip-forming elements (24) each have an upper edge (242) adjacent to the lateral plane clearance face (13, 14) and being partly straight and/or convex curved at a width approximately corresponding to the width of the chip-forming protective flank land, so that the spacing between the upper edge (242) and the cutting edge (15) increases in the direction of the recessing-insert longitudinal axis (25).

3. Recess-cutting insert according to claim 1 or 2, characterised in that between the chip-surface protective flanks (32, 33) and the chip-forming recess (31, 27) a step (34) is arranged at a spacing (A) of more than 0,1 mm or more than 3% of the cut width (S) from the end cutter (15, 15', 15'', 15'''), which can be arranged perpendicular or inclined to the recessing-insert longitudinal axis; the step (34) preferably has an upper surface (341) that is horizontal or inclined at an angle of up to 17° to the recessing-insert support surface in a direction perpendicular to the longitudinal axis (25) and an inner surface (242) directed toward the chip-forming recess (31), the step (34) preferably having a height (h₂) from 0,2 mm to 1,5 mm and/or that the inner surface (342) is planar and inclined perpendicular to the longitudinal axis (25) at an angle (ϕ) from 20° to 40°, preferably 25° to 35° relative to the recessing-insert support surfaces.

4. Recessing-insert according to one of claims 1 to 3, characterised in that the front cutter (15) is inclined relative to a vertical plane to the recessing-insert longitudinal axis (25) up to 18°, preferably up to 9°, with a cut width of up to 4 mm, up to 12° with a cut of up to 3 mm, and up to 16° with a cut width of up to 2 mm.

5. Recessing-insert according to one of the claims 1 to 4, characterised in that the rake face edge parts (32, 33) at a spacing from the front cutter (15) ascend and form laterally of the auxiliary cutting edges (16, 17) a lateral guide web (35) as a protective land.

6. Recessing-insert according to one of claims 3 to 5, characterised in that the rake face edge parts (32, 33) are arranged perpendicular to the end cutter (15) at an absolutely smaller rake angel than the rake angle of the chip-forming recess, whereby preferably the rake angle (γ₁) of the rake face edge parts (32, 33) lies between - 10° and +10°, preferably -5° to +5° and/or the rake angle of the chip-forming recess (31) is up to 30°, preferably 17° to 23° and/or the angle at which the step (34) is inclined to the longitudinal axis (25) is between -10° and +10°, preferably -5° and +8°.

7. Recessing-insert according to one of claims 3 to 6, characterised in that the step surfaces (34) generally merge with the nose-shaped chip-forming elements (24).

8. Recessing-insert according to one of claims 1 through 7, characterised in that the tangential angle which the upper edge (242) of the chip-forming element forms with the recessing-insert longitudinal axis (25) decreases measured at a spacing of the width of the defining protective-flank land (22) from a starting value between 65° and 80° to 35° to 75° measures at a spacing of 1½ times the protective-flank land width and/or that the inner flanks (245, 246, 247) of the chip-forming elements (24) turned toward the chip-forming recess (23) run toward each other in the chip-travel direction, whereby the flanks can be in this partial region lightly curved or even planar, preferably the upper edge (242) forming a tangential angle (α₃) with the lateral clearance face (13, 14) of between 5° and 30°.

9. Recessing-insert according to one of claims 1 through 8, characterised in that the side flanks (244 to 247) turned toward the cutting edge (15) and toward the chip-forming recess (23), that is the front and inner surfaces of the chip-forming elements (24), form seen in side view ascending angles (β) in the range between 30° and 70°, preferably 40° to 60° and/or that the angles (β) of gradient of the front surfaces (244) of the regions at the lateral clearance faces (13, 14) have increasing angles (β) of gradient to the inner faces (245, 246, 247) defining the chip-forming recess (23).

10. Recessing-insert according to one of claims 1 to 9, characterised in that the chip-shaping recess (23) forms on its side turned toward the cutting edge (15) a positive ship-shaping angle.

11. Recessing-insert according to one of claims 1 to 10, characterised in that the maximum rake-angle difference between the chip-forming recess and the lateral chip-surface protective flank is larger than 27° and/or that the spacing (a) from the cutting edge (15) to the base curve (243) lies in the region of the front surface (244) between 0,35 mm and 3,5 mm, preferably 0,7 mm and 1,8 mm.

12. Recessing-insert according to one of claims 1 to 11, characterised in that the rake angle of the chip-surface protective lands is in a region (21) close to the cutting edge 0,3 mm to 2 mm, in particular 0,4 mm to 1,4 mm, long is first negative, is in a succeeding region (22) of preferably 0,1 mm to 1 mm positive, preferably between 1° and 5° or 0° and is subsequently again negative or here connects to the chip-forming element.

13. Recessing-insert according to one of claims 1 to 13, characterised in that the rake face protective lands (21, 22) have perpendicular to the end cutter (15) at regions remote from the cutting edge a decreasing width that preferably decreases degressively, whereby preferably the width decreases to 15% to 50% of the width of the rake face protective land (21) at the cutting edge and/or whereby preferably the lateral rake face protective lands have in a region (22) remote from the cutting edge over a chip-travel path of 0,1 mm to 1 mm a constant width.

14. Recessing-insert according to one of claims 1 through 14, characterised in that the lateral clearance faces (13, 14) and/or the front clearance faces (12) are set at a positive clearance angle of 2° to 15°.

15. Use of the recessing-insert according to claims 1 to 14, for recess-turning preferably for plunge-cutting or deep plunge cutting for slitting or cutting off and/or for working tough or highly alloyed steel and nonferrous materials.

## Revendications

1. Insert à saigner pour l'usinage de pièces à enlèvement de copeaux, avec un tranchant frontal (15, 15', 15'', 15''') disposé transversalement à l'axe longitudinal (25) de l'insert à saigner, un creux concave central à former le copeau (23, 27) qui est limité latéralement par des flancs protecteurs (21, 22, 32, 33) de la face de coupe, des éléments élevés à former le copeau (24), qui sont dirigés vers le creux à former le copeau (23, 27) et se projettent dans celui-ci, étant prévus à la suite de chacun des flancs protecteurs (21, 22, 32, 33) de la face de coupe, lesdits éléments sont placés en vis-à-vis à symétrie spéculaire par rapport à l'axe longitudinal (25) de l'insert de coupe et rétrécissent la surface de base du creux à former le copeau dans la direction de l'écoulement du copeau,
**caractérisé par le fait**
que les éléments élevés à former le copeau (24) se projettent en forme de nez dans le creux à former le copeau (23, 27) et rétrécissent celui-ci dans la direction de l'écoulement du copeau d'une manière brusque, de préférence discontinue, l'angle tangentiel que forme le bord supérieur (242) de l'élément à former le copeau (24) avec l'axe longitudinal (25) de l'insert à saigner, mesuré à une distance de la largeur du chanfrein adjacent (22, 32, 33) du flanc protecteur de la face de coupe, passant de valeurs initiales plus grandes (α₁) à (α₂) 35° à 75°, mesurées à peu près à une distance de 1 1/2 fois la largeur du chanfrein du flanc protecteur de la face de coupe, et se terminant finalement dans une arête rectiligne qui est inclinée à un angle (α₃) de 5° à 30° par rapport à l'axe longitudinal (25) de l'insert à saigner.

2. Insert à saigner selon la revendication 1, caractérisé par le fait que les éléments à former le copeau présentent des faces latérales convexes (244 à 249), que les éléments à former le copeau (24) dépassent les flancs protecteurs (22) de la face de coupe et en hauteur et en largeur et que les éléments à former le copeau (24) présentent respectivement un bord supérieur (242) qui est adjacent à la face de dépouille latérale plane (13, 14) et est en partie rectiligne et/ou est courbé de façon convexe sur une largeur correspondant à peu près à la largeur du chanfrein du flanc protecteur de la face de coupe, de sorte que la distance du bord supérieur (242) au tranchant (15) augmente dans la direction de l'axe longitudinal (25) de l'insert à saigner.

3. Insert à saigner selon la revendication 1 ou 2, caractérisé par le fait qu'un gradin (34) est disposé entre les flancs protecteurs (32, 33) de la face de coupe et le creux (31, 27) à former le copeau, respectivement à une distance (A) de plus de 0,1 mm ou de plus de 3% de la largeur à saigner en (S) du tranchant frontal (15, 15', 15'', 15''') qui peut être disposé verticalement ou à angle incliné par rapport à l'axe longitudinal de l'insert à saigner, ce gradin présente de préférence une surface supérieure (341) qui est horizontale ou inclinée à un angle allant jusqu'à 17° par rapport à la surface de support de l'insert à saigner dans une direction perpendiculaire à l'axe longitudinal (25), et une surface intérieure (342) dirigée vers le creux à former le copeau (31), le gradin (34) présentant de préférence une hauteur de gradin (h₂) comprise entre 0,2 et 1,5 mm et/ou la surface intérieure (342) étant plane et étant inclinée, dans la direction verticale à l'axe longitudinal (25), à un angle (ϕ) compris entre 20 et 40°, de préférence entre 25 et 35° par rapport à la surface de support de l'insert à saigner.

4. Insert à saigner selon l'une des revendications 1 à 3, caractérisé par le fait que le tranchant frontal (15) est incliné par rapport à un plan vertical à l'axe longitudinal (25) de l'insert à saigner jusqu'à 18°, de préférence jusqu'à 9° avec une largeur à saigner allant jusqu'à 4 mm. jusqu'à 12° avec une largeur à saigner allant jusqu'à 3 mm et jusqu'à 16° avec une largeur à saigner allant jusqu'à 2 mm.

5. Insert à saigner selon l'une des revendications 1 à 4, caractérisé par le fait que, à une distance de l'arête frontale (15), les parties marginales (32, 33) de la face de coupe, en formant une surface de guidage latérale (35) adjacente au tranchant secondaire (16, 17), montent en tant que chanfreins de protection.

6. Insert à saigner selon l'une des revendications 3 à 5, caractérisé par le fait que les parties marginales (32, 33) de la face de coupe, perpendiculairement au tranchant frontal (15), sont disposées à un angle de coupe absolument plus petit que l'angle de coupe du creux à former le copeau, de préférence, l'angle de coupe (γ₁) des parties marginales (32, 33) de la face de coupe étant compris entre -10° et +10°, de préférence entre -5° et +5°, et/ou l'angle de coupe du creux à former le copeau (31) allant jusqu'à 30°, de préférence étant compris entre 17 et 23°, et/ou l'angle sous lequel le gradin (34) est incliné dans la direction de l'axe longitudinal (25) étant compris entre -10° et +10°, de préférence entre -5° et +8°.

7. Insert à saigner selon l'une des revendications 3 à 6, caractérisé par le fait que les surfaces de gradin (34) sont à peu prés alignées avec les éléments à former le copeau (24) en forme de nez.

8. Insert à saigner selon l'une des revendications 1 à 7, caractérisé par le fait que l'angle tangentiel que forme le bord supérieur (242) de l'élément à former le copeau avec l'axe longitudinal (25) de l'insert à saigner, mesuré à une distance de la largeur du chanfrein adjacent (22) du flanc protecteur, passe de valeurs initiales comprises entre 65° et 80° à 35° à 75°, mesurées à peu prés à une distance de 1 1/2 fois la largeur du chanfrein du flanc protecteur, et/ou que les flancs intérieurs (245, 246, 247) des éléments à former le copeau (24), qui sont tournés vers le creux à former le copeau (23) convergent vu dans la direction d'écoulement du copeau, les flancs pouvant être légèrement courbés ou également être plans dans cette région partielle, de préférence, le bord supérieur (242) formant avec la face latérale de dépouille (13, 14) un angle tangentiel (α₃) qui est compris entre 5° et 30°.

9. Insert à saigner selon l'une des revendications 1 à 8, caractérisé par le fait que le flanc latéral (244 à 247) tourné vers le tranchant (15) ainsi que vers le creux à former le copeau (23), c'est-à-dire les fronts et surfaces intérieures des éléments à former le copeau (24), forment - vus dans une vue de côté - des angles d'inclinaison (β) compris entre 30° et 70°, de préférence entre 40° et 60°, et/ou que les angles d'inclinaison (β) des fronts (244) présentent des angles d'inclinaison (β) croissants des régions contiguës aux faces latérales de dépouille (13, 14) vers les faces intérieures (245, 246, 247) adjacentes au creux à former le copeau (23).

10. Insert à saigner selon l'une des revendications 1 à 9, caractérisé par le fait que le creux à former le copeau (23) forme, de son côté tourné vers le tranchant (15), un angle positif à former le copeau.

11. Insert à saigner selon l'une des revendications 1 à 10, caractérisé par le fait que la différence maximale de l'angle de coupe entre le creux à former le copeau et les flancs protecteurs latéraux de la face de coupe est supérieure à 27° et/ou que la distance (a) du tranchant (15) à la courbe de base (243) est, dans la zone du front (244), comprise entre 0,35 mm et 3,5 mm, de préférence entre 0,7 mm et 1,8 mm.

12. Insert à saigner selon l'une des revendications 1 à 11, caractérisé par le fait que l'angle de coupe des chanfreins protecteurs de la face de coupe est d'abord négatif dans la zone (21) située prés du tranchant, d'une longueur comprise de préférence entre 0,3 mm et 2 mm, en particulier entre 0,4 mm et 1,4 mm, est positif, de préférence compris entre 1° et 5° ou de 0°, dans une zone (22) adjacente à cela de 0.1 mm à 1 mm de préférence et est, à la suite de cela, de nouveau négatif, ou l'élément à former le copeau est disposé à la suite de cela.

13. Insert à saigner selon l'une des revendications 1 à 12, caractérisé par le fait que les chanfreins protecteurs (21, 22) de la face de coupe présentent, perpendiculairement au tranchant frontal (15) vers des zones situées plus loin du tranchant, une largeur diminuante, de préférence une largeur qui diminue de manière dégressive, la largeur passant de préférence à 15% à 50% par rapport à la largeur du chanfrein protecteur (21) de la face de coupe sur le tranchant et/ou, de préférence, le chanfrein protecteur latéral de la face de coupe présentant une largeur constante dans une zone (22) située plus loin du tranchant, sur un chemin d'écoulement du copeau de 0,1 mm à 1 mm.

14. Insert à saigner selon l'une des revendications 1 à 13, caractérisé par le fait que la (les) face(s) de dépouille latérale(s) (13, 14) et/ou frontale(s) (12) sont disposées à un angle positif de dépouille compris entre 2° et 15°.

15. Utilisation de l'insert à saigner selon les revendications 1 à 14 pour le tournage en plongée, de préférence pour la plongée ou la plongée profonde, pour le fraisage de rainures ou de séparation et/ou pour le traitement de matériaux en acier et non-ferreux tenaces ou fortement alliés.
